## Europäisches Patentamt

(19) **European Patent Office**

**Office européen des brevets**

(11) Veröffentlichungsnummer: **0 054 196**
**B1**

(12) # EUROPÄISCHE PATENTSCHRIFT

(45) Veröffentlichungstag der Patentschrift:
**16.05.84**

(51) Int. Cl.³: **C 01 B 25/14,** B 01 F 15/02,
B 01 J 4/00

(21) Anmeldenummer: **81109763.3**

(22) Anmeldetag: **19.11.81**

(54) **Anlage zur Herstellung von Phosphorpentasulfid.**

(30) Priorität: **17.12.80 DE 3047505**

(43) Veröffentlichungstag der Anmeldung:
**23.06.82 Patentblatt 82/25**

(45) Bekanntmachung des Hinweises auf die Patenterteilung:
**16.05.84 Patentblatt 84/20**

(84) Benannte Vertragsstaaten:
**CH DE GB IT LI**

(56) Entgegenhaltungen:
**DE - A - 1 667 162**
**DE - B - 1 767 322**
**US - A - 3 342 552**
**US - A - 3 414 164**

(73) Patentinhaber: **HOECHST AKTIENGESELLSCHAFT,**
**Postfach 80 03 20, D-6230 Frankfurt am Main 80 (DE)**

(72) Erfinder: **Benscheidt, Hans-Dieter, Tückingstrasse 26a,**
**D-5800 Hagen 7 (DE)**
Erfinder: **Neumann, Friedrich, Oststrasse 2c,**
**D-4755 Holzwickede-Hengsen (DE)**
Erfinder: **Reichert, Günter, Weiherstrasse 26,**
**D-5303 Bornheim-Merten (DE)**
Erfinder: **Niermann, Hermann, Dr., Am Wachberg 34,**
**D-5042 Erftstadt (DE)**

## Anlage zur Herstellung von Phosphorpentasulfid

Die vorliegende Erfindung betrifft eine Anlage zur Herstellung von $P_2S_5$, die aus mehreren Reaktoren und einem einzigen, für diese Reaktoren gemeinsamen Sammelbehälter für flüssiges $P_2S_5$ besteht, der mit mehreren Einlaufrohren versehen ist, die jeweils zu den Reaktoren führen.

Phosphorpentasulfid wird allgemein durch Reaktion von Schwefel und gelbem Phosphor in Reaktionskesseln bei Temperaturen zwischen 300 und 500°C hergestellt.

Aus der DE-PS 17 67 322 ist eine Anlage zur Herstellung von $P_2S_5$ bekannt, die aus mehreren, mit Zuleitungen für Phosphor und Schwefel versehenen Reaktoren besteht, die über Überlauf- und gegebenenfalls Bodenablaufleitungen mit einem gemeinsamen mit einer Rührvorrichtung versehenen Sammelbehälter verbunden sind, von dem eine Leitung zu einer Kühl- und Mahlvorrichtung führt. Die Überlaufleitungen sowie der Sammelbehälter sind mit Vorrichtungen zur Beheizung sowie Temperaturmessung und -regulierung versehen.

Das flüssige Phosphorpentasulfid wird dabei zur weiteren Homogenisierung einer thermischen Nachbehandlung in dem Sammelbehälter unterzogen, bevor es verfestigt und gemahlen wird.

Für den Verfestigungsvorgang werden verschiedene Aggregate, z. B. Kühlschnecken, Kühltrommeln, Drehteller oder Kühlwalzen, benutzt, je nachdem, ob ein hoch- oder niedrigreaktives Phosphorpentalsulfid gewünscht wird.

Sind an einen Produktionsprozeß zwei oder mehr Kühlaggregate angeschlossen, so ergeben sich Probleme, wenn man von einem auf das andere Aggregat wechseln will.

Ventile, die dieses Überwechseln mit Hilfe verschiedener Zuleitungen ermöglichen würden, sind nur bedingt für diesen Zweck zu verwenden. Bei den herrschenden Temperaturen von ca. 400°C ergeben sich Dichtungs- und Korrosionsprobleme. Darüber hinaus ist, wenn man mit mehreren Reaktoren auf mehrere Kühlaggregate wechselweise arbeiten will, ein umfangreiches System von Leitungen und Ventilen erforderlich.

Aufgabe der vorliegenden Erfindung ist es, eine neue Vorrichtung zu schaffen, die es in einem kontinuierlichen Verfahren ermöglicht, aus mehreren Reaktoren stammendes flüssiges $P_2S_5$ zu dessen Verfestigung wahlweise auf mehrere Kühlaggregate möglichst störungsfrei zu verteilen.

Überraschenderweise wurde gefunden, daß sich diese Aufgabe durch eine Anlage lösen läßt, wie sie in der nachfolgenden Zeichnung dargestellt ist.

Eine solche Anlage besteht aus mehreren Reaktoren und einem einzigen für diese Reaktoren gemeinsamen Sammelbehälter für flüssiges $P_2S_5$, der mit mehreren Einlaufrohren versehen ist, die jeweils zu den Reaktoren führen und dem eine Kühleinrichtung nachgeschaltet ist. Erfindungsgemäß sind nun dem Sammelbehälter (1) über jeweils getrennte Ablaufrohre (2, 3, 4) zusätzlich weitere Kühleinrichtungen (5, 6, 7) nachgeschaltet, und der Sammelbehälter (1) ist durch Trennwände (8, 9) in — entsprechend der Zahl der Ablaufrohre (2, 3, 4) — mehrere separate Kammern (10, 11, 12) unterteilt, in welche die Ablaufrohre (2, 3, 4) jeweils münden. Ferner sind die Zulaufrohre (13, 14) schwenkbar und so oberhalb der Kammern (10, 11, 12) angeordnet, daß aus ihnen das flüssige $P_2S_5$ wahlweise in jeweils eine der Kammern (10, 11, 12) geleitet werden kann.

Weitere Ausgestaltungen dieser Anlage können sein,

a)   daß die Ablaufrohre (2, 3, 4) der Kammern (10, 11, 12) jeweils als Bodenablauf ausgeführt sind;

b)   daß die Ablaufrohre (2, 3, 4) in den Kammern (10, 11, 12) als Überlauf ausgeführt sind und auf einer Höhe enden, die unterhalb der Oberkante der Trennwände (8, 9) und wesentlich oberhalb des Bodens der Kammern (10, 11, 12) liegt;

c)   daß in den Kammern (10, 11, 12) Rührwerke (15) installiert sind;

d)   daß die Oberkanten der Trennwände (8, 9) bis auf unterschiedliche Höhen hinaufreichen, so daß die einzelnen Trennwände (8, 9) jeweils einen Überlauf zwischen benachbarten Kammern (10, 11, 12) bilden und letztere Füllvolumina unterschiedlicher Größe aufweisen;

e)   daß die Kühleinrichtungen insgesamt unterschiedlicher Art sind; und

f)   daß die am wenigsten störanfällige Kühleinrichtung (5, 6, 7) mit der jeweiligen Kammer (10, 11, 12) verbunden ist, welche das geringste Füllvolumen aufweist.

Die erfindungsgemäße Anlage zeichnet sich dadurch aus, daß sie es auf einfache Weise ermöglicht, von einem einzigen Sammelbehälter für flüssiges $P_2S_5$ in getrennten Kühleinrichtungen gleichzeitig $P_2S_5$ verschiedener Reaktivitäten herzustellen, ohne daß dafür ein umfangreiches, mit zur Verstopfung und zu Undichtigkeiten neigenden Ventilen usw. versehenes Leitungssystem erforderlich wäre.

Ein weiterer Vorteil der neuen Anlage ist, daß sie es gestattet, bei an den Kühlaggregaten eintretenden Störungen sofort das von den Reaktoren laufend zufließende $P_2S_5$ auf andere Kühlaggregate umzuleiten.

Aus diesem Grunde empfiehlt es sich auch, an diejenige Kammer des Sammelbehälters, welche das geringste Füllvolumen aufweist, das am wenigsten störanfällige Kühlaggregat anzuschließen, welches im allgemeinen eine Kühlwalze ist, die über einen großen Belastungsbereich verfügt.

Beispiel

Zwei Reaktoren, die stündlich ca. 750 kg $P_2S_5$ durch Reaktion von gereinigtem Phosphor und Schwefel bei 380°C erzeugten, wurden mit schwenkbaren Einlaufrohren (13) und (14) auf einen Sammelbehälter (1) für flüssiges $P_2S_5$ geschaltet, das durch elektrische Beheizung auf ca. 380°C gehalten wurde.

Der Sammelbehälter (1) war in drei Kammern (10, 11 und 12) aufgeteilt, von denen jeweils ein Kühlaggregat (5, 6, 7) bedient werden konnte. In jeder Kammer befand sich ein Rührer (15), mit dessen Hilfe das ca. eine Stunde verweilende und über einen Überlauf (2, 3 und 4) zum jeweiligen Kühlaggregat abfließende $P_2S_5$ homogenisiert wurde.

Die drei Kammern (10, 11 und 12) hatten unterschiedliche hohe Trennwände (8, 9), so daß beim Überlauf von einer Kammer zur anderen das überfließende $P_2S_5$ der Kammer zulief, deren Kühlaggregat die größte Kapazität aufwies, in diesem Fall der Kühlwalze (7).

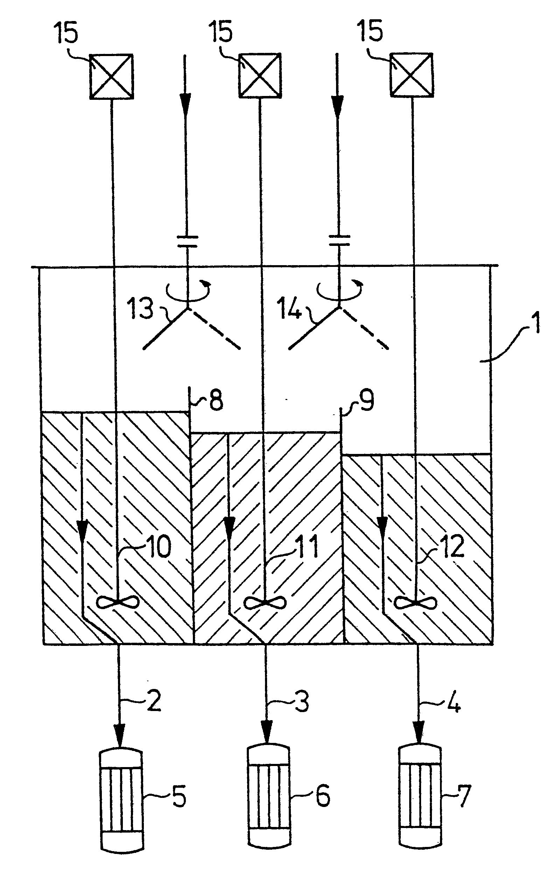

**Patentansprüche**

1. Anlage zur Herstellung von $P_2S_5$ bestehend aus mehreren Reaktoren und einem einzigen für diese Reaktoren gemeinsamen Sammelbehälter für flüssiges $P_2S_5$, der mit mehreren Einlaufrohren versehen ist, die jeweils zu den Reaktoren führen und dem eine Kühleinrichtung nachgeschaltet ist, dadurch gekennzeichnet, daß dem Sammelbehälter (1) über jeweils getrennte Ablaufrohre (2, 3, 4) zusätzlich weitere Kühleinrichtungen (5, 6, 7) nachgeschaltet sind, daß der Sammelbehälter durch Trennwände (8, 9) in — entsprechend der Zahl der Ablaufrohre (2, 3, 4) — mehrere separate Kammern (10, 11, 12) unterteilt ist, in welche die Ablaufrohre (2, 3, 4) jeweils münden, und daß die Zulaufrohre (13, 14) schwenkbar und so oberhalb der Kammern (10, 11, 12) angeordnet sind, daß aus ihnen das flüssige $P_2S_5$ wahlweise in jeweils eine der Kammern (10, 11, 12) geleitet werden kann.

2. Anlage nach Anspruch 1, dadurch gekennzeichnet, daß die Ablaufrohre (2, 3, 4) der Kammern (10, 11, 12) jeweils als Bodenablauf ausgeführt sind.

3. Anlage nach Anspruch 1, dadurch gekennzeichnet, daß die Ablaufrohre (2, 3, 4) in den Kammern (10, 11, 12) als Überlauf ausgeführt sind und auf einer Höhe enden, die unterhalb der Oberkante der Trennwände (8, 9) und wesentlich oberhalb des Bodens der Kammern (10, 11, 12) liegt.

4. Anlage nach Anspruch 3, dadurch gekennzeichnet, daß in den Kammern (10, 11, 12) Rührwerke (15) installiert sind.

5. Anlage nach einem der Ansprüche 1 bis 4, dadurch gekennzeichnet, daß die Oberkanten der Trennwände (8, 9) bis auf unterschiedliche Höhen hinaufreichen, so daß die einzelnen Trennwände (8, 9) jeweils einen Überlauf zwischen benachbarten Kammern (10, 11, 12) bilden und letztere Füllvolumina unterschiedlicher Größe aufweisen.

6. Anlage nach einem der Ansprüche 1 bis 5, dadurch gekennzeichnet, daß die Kühleinrichtungen insgesamt unterschiedlicher Art sind.

7. Anlage nach Anspruch 6, dadurch gekennzeichnet, daß die am wenigsten störanfällige Kühleinrichtung (5, 6, 7) mit der jeweiligen Kammer (10, 11, 12) verbunden ist, welche das geringste Füllvolumen aufweist.

**Claims**

1. Apparatus for making $P_2S_5$ comprised of a plurality of reactors and one liquid $P_2S_5$-collecting tank which is common to all of the reactors, the tank being provided with a plurality of feed pipes running to the various reactors and having a cooling device placed downstream thereof, wherein the collecting tank (1) has a plurality of cooling devices (5, 6, 7) arranged downstream thereof and connected thereto by means of separate outlet pipes (2, 3, 4), the collecting tank being subdivided py partitions (8, 9) into a plurality of separate chambers (10, 11, 12) corresponding in number to the number of outlet pipes (2, 3, 4) which ofen thereinto, feed pipes (13, 14) being pivotably arranged above the chambers (10, 11, 12) so as to permit liquid $P_2S_5$ to be introduced into a chamber selected at will.

2. Apparatus as claimed in claim 1, wherein the outlets (2, 3, 4) in chambers (10, 11, 12) are bottom outlets.

3. Apparatus as claimed in claim 1, wherein the outlets (2, 3, 4) in chambers (10, 11, 12) are overflows terminating at a level lower than the upper end of the partitions (8, 9) and considerably above the bottom of chambers (10, 11, 12).

4. Apparatus as claimed in claim 3, wherein the chambers (10, 11, 12) have agitators (15) installed therein.

5. Apparatus as claimed in any of claims 1 to 4, wherein the upper ends of the partitions (8, 9) terminate at different levels, the individual partitions (8, 9) forming in each case an overflow between two adjacent chambers (10, 11, 12) with different filling volumes.

6. Apparatus as claimed in any of claims 1 to 5, wherein different cooling devices are provided.

7. Apparatus as claimed in claim 6, wherein the cooling device (5, 6, 7) most unsusceptible to disturbances is connected to the chamber (10, 11, 12) with the lowest filling volume.

**Revendications**

1. Appareil destiné à la préparation de $P_2S_5$, comportant plusieurs récateurs et un seul recipient collecteur de $P_2S_5$ liquide commun à l'ensemble des réacteurs, le réservoir collecteur étant muni de plusieurs tubes d'amenée conduisant aux divers réacteurs et un dispositif de refroidissement étant placé en aval du réservoir collecteur, caractérisé en ce que des dipositifs de refroidissement supplémentaires (5, 6, 7) sont disposés en aval du récipient collecteur (1) et y reliés à l'aide de tubes de sortie séparés (2, 3, 4), le récipient collecteur étant subdivisé par des parois de séparation (8, 9) en plusieurs chambres séparées (10, 11, 12), dont le nombre correspond au nombre de tubes de sortie (2, 3, 4) débouchant dans celles-ci, les tubes d'amenée (13, 14) étant pivotables et disposés au-dessus des chambres (10, 11, 12) de manière à permettre au choix l'introduction de $P_2S_5$ liquide dans l'une quelconque de ces chambres.

2. Appareil selon la revendication 1, caractérisé en ce que les tubes de sortie (2, 3, 4) dans les chambres (10, 11, 12) recoivent la forme de sorties de fond.

3. Appareil selon la revendication 1, caractérisé en ce que les tubes de sortie (2, 3, 4) dans les chambres (10, 11, 12) recoivent la forme d'un trop-plein se terminant à un niveau inférieur au bord supérieur des parois de séparation (8, 9) et considérablement au-dessus du fond des chambres (10, 11, 12).

4. Appareil selon la revendication 3, caractérisé en ce que les chambres (10, 11, 12) sont munies d'agitateurs (15).

5. Appareil selon l'une des revendications 1 à 4, caractérisé en ce que les extrémités supérieures des parois de séparation (8, 9) se terminent à des niveaux différente, les parois de séparation individuelles (8, 9) formant dans chaque cas particulier un trop-plein entre deux chambres voisines (10, 11, 12) à volumes de remplissage différents.

6. Appareil selon l'une des revendications 1 à 5, caractérisé en ce qu'il est muni de dipsositifs de refroidissement différents.

7. Appareil selon la revendication 6, caractérisé en ce que le dispositif de refroidissement (5, 6, 7) le moins sensible à des dérangements est relié à la chambre (10, 11, 12) présentant le moindre volume de remplissage.